# EUROPEAN PATENT APPLICATION

(11) **EP 3 886 114 A1**
(43) Date of publication of application: **29.09.2021**
(21) Application number: 18940789.3
(22) Date of filing: 02.12.2018
(51) Int. Cl.: G21C 13/028

(54) **NUCLEAR POWER PLANT EQUIPMENT GATE CONNECTION FASTENING STRUCTURE AND FASTENING METHOD THEREFOR**

(30) Priority: 19.11.2018 CN 201811380211
(71) Applicant: China Nuclear Power Design Company Ltd. (Shenzhen), Shenzhen, Guangdong 518100 (CN); China Nuclear Power Engineering Co., Ltd., Shenzhen, Guangdong 518124 (CN); China General Nuclear Power Group, Shenzhen, Guangdong 518031 (CN); CGN Power Co., Ltd., Shenzhen, Guangdong 518031 (CN)
(72) Inventor: LIU, Xiaohua, Shenzhen, Guangdong 518100 (CN); ZHANG, Feng, Shenzhen, Guangdong 518100 (CN); XIE, Honghu, Shenzhen, Guangdong 518100 (CN); CHEN, Chuyuan, Shenzhen, Guangdong 518100 (CN); LI, Yue, Shenzhen, Guangdong 518100 (CN); LI, Shilei, Shenzhen, Guangdong 518100 (CN)
(74) Representative: Greaves Brewster LLP
(86) International application number: PCT/CN2018/118808
(87) International publication number: WO 2020/103185

(57) **Abstract**

The present invention provides a nuclear power plant equipment gate connection fastening structure and fastening method therefor. The nuclear power plant equipment gate connection fastening structure includes a sleeve flange (10) fixedly connected to a penetrating sleeve (12) pre-embedded in a containment wall and a shell cover flange (20) fixedly connected to a gate shell cover (22). A number of "U"-shaped holes (30) having openings facing outward are provided at the corresponding positions of the sleeve flange (10) and the shell cover flange (20) along the circumference thereof. After the sleeve flange (10) and the shell cover flange (20) are in butt joint, the sleeve flange (10) and the shell cover flange (20) are fastened by means of eyelet bolt assemblies (40). Each eyelet bolt assembly (40) includes a detachable eyelet bolt (42), an external nut (44), and an adjustable gasket (46) sheathed onto the eyelet bolt (42). The fastening method of the present invention includes the steps of: 1) arranging orientations according to the eyelet bolt assemblies (40) of an equipment gate, and performing bolt pre-tightening by a bolt tensioner, the bolt tensioner containing 2-4 combination tension heads, each combination tension head containing 2-4 tension cylinders for pre-tightening 4-16 eyelet bolt assemblies (40) each time; 2) during pre-tightening, symmetrically and evenly placing the combination tension heads on the eyelet bolt assemblies (40) which are circumferentially arranged, and connecting a hydraulic pump station (83) via a hydraulic pipeline (82); 3) performing tension and pre-tightening operations on the eyelet bolts (42) by using hydraulic power assist after starting the hydraulic pump station (83); 4) performing the pre-tightening operation by switching to the next set of the eyelet bolt assemblies (40) clockwise or counterclockwise after one set of the eyelet bolt assemblies (40) being pre-tightened fully. The connection fastening structure and fastening method therefor can enable the equipment gate to be opened and closed quickly, to avoid some of the bolts from being incapable of being mounted due to the deformation of the sleeve flange (10) and a bolt hole of the equipment from being damaged.

## Description

### FIELD OF THE INVENTION

The present invention generally relates to nuclear power plants, and more particularly, relates to a nuclear power plant equipment gate connection fastening structure and fastening method therefor.

### BACKGROUND OF THE INVENTION

The equipment gate of a nuclear power plant is located on the reactor containment, and mainly serves as the access channel for large equipment (such as steam generators) in the reactor building during the construction of the nuclear power plant and shutdown or refueling of the nuclear power plant. During the operation of the nuclear power plant and in an accident state, the equipment gate is closed and forms a third barrier together with the reactor containment, to prevent the leakage of radioactive materials and act as a part of the containment pressure boundary.

The conventional main structure of the equipment gate is a steel butterfly head. When the equipment gate is closed, the shell cover flange and the sleeve flange welded on a penetrating sleeve pre-embedded in the containment wall are connected and tightened by a main bolt, to compress the sealing component and ensure the fixing of the gate shell cover and the sealing performance of the equipment gate.

The flange of the gate shell cover defines a circle of through holes along the circumference thereof. The sleeve flange correspondingly defines a circle of bolt holes along the circumference thereof. After the gate shell cover and the penetrating sleeve are connected and the bolt holes are in alignment with each other, connecting main bolts are manually tightened from the side of the gate shell cover. However, the conventional nuclear power plant equipment gate connection fastening structure has the following disadvantage:
1) When the equipment gate is opened, it is necessary to manually loosen the connecting main bolts and remove the connecting main bolts one by one for storage. When the equipment gate is closed, the connecting main bolts need to be installed one by one, and then to be pre-tightened one by one with a torque wrench, which leads to waste of manpower, material resources and time.
2) The penetrating sleeve is pre-embedded along with the concrete containment. As time goes by, the prestress of the concrete containment will lead to slight deformation of the penetrating sleeve, which may cause misalignment of some bolt holes and affect smooth installation of the main bolts.
3) During the entire life span of the nuclear power plant, the equipment gate is opened and closed frequently. Frequent tightening of the connecting main bolt may cause damage to the connecting thread. In addtion, the thread is defined inside the sleeve flange and cannot be replaced during the entire life span of the nuclear power plant but can only be repaired.

In view of the foregoing, what is needed, therefore, is to provide a nuclear power plant equipment gate connection fastening structure and fastening method therefor, to improve opening and closing efficiency of the equipment gate, solve the problem that the bolt cannot be installed due to the deformation of the sleeve, and avoid the inability to replace the thread due to damage.

### SUMMARY OF THE INVENTION

One object of the present invention is to overcome the disadvantages of the prior art, and provide a nuclear power plant equipment gate connection fastening structure and fastening method therefor, which can improve the opening and closing efficiency of the equipment gate, solve the problem that the bolt cannot be installed due to the deformation of the sleeve, and avoid the inability to replace the thread due to damage.

According to one embodiment of the present invention, a nuclear power plant equipment gate connection fastening structure includes:
a sleeve flange fixedly connected to a penetrating sleeve pre-embedded in a containment wall; and
a shell cover flange fixedly connected to a gate shell cover;
wherein a number of "U"-shaped holes having openings facing outward are provided at corresponding positions of the sleeve flange and the shell cover flange along the circumference thereof, after the sleeve flange and the shell cover flange are in butt joint, the sleeve flange and the shell cover flange are fastened by means of eyelet bolt assemblies, and each eyelet bolt assembly includes a detachable eyelet bolt, an external nut, and an adjustable gasket to prevent the external nut from jamming sheathed onto the eyelet bolt.

According to one aspect of the present invention, the adjustable gasket includes a conical gasket and a spherical gasket, when tightened, a plane of the conical gasket abuts against the shell cover flange, a spherical surface of the spherical gasket is located in a concave surface of the conical gasket, and the external nut abuts against the spherical gasket.

According to one aspect of the present invention, a support is provided on an outer side of the sleeve flange, a pin is provided on the support, and the pin is inserted in a bolt hole defined in the detachable eyelet bolt and acts as a fixed shaft and rotating shaft of the eyelet bolt assembly.

According to one aspect of the present invention, the penetrating sleeve is formed with a spring clip, and a distance between the spring clip and the sleeve flange is smaller than a length of the detachable eyelet bolt, so that the rotated eyelet bolt assembly is received in the spring clip when the equipment gate is opened.

According to one aspect of the present invention, the spring clip includes two symmetrically arranged spring plates, and a positioning component is arranged between the two spring plates.

According to one aspect of the present invention, the spring clip is fixed on the penetrating sleeve by a bolt.

According to one aspect of the present invention, the support is fixed on the sleeve flange by welding.

According to one aspect of the present invention, a sealing element is provided on a sealing surface of the sleeve flange, and the sealing element includes a screw, a pressure plate, an inner sealing ring and an outer sealing ring, the inner sealing ring and the outer sealing ring are arranged on the sleeve flange, and the pressure plate is pressed on the inner sealing ring and the outer sealing ring by screws.

According to another embodiment of the present invention, method for fastening a nuclear power plant equipment gate connection fastening structure of the present invention includes the steps of:
1) arranging orientations according to eyelet bolt assemblies of an equipment gate, and performing bolt pre-tightening by a bolt tensioner, the bolt tensioner containing 2-4 combination tension heads, each combination tension head containing 2-4 tension cylinders for pre-tightening 4-16 eyelet bolt assemblies each time;
2) during pre-tightening, symmetrically and evenly placing the combination tension heads on the eyelet bolt assemblies which are circumferentially arranged, and connecting to a hydraulic pump station via a hydraulic pipeline;
3) performing tension and pre-tightening operations on the eyelet bolts by hydraulic power assist after starting the hydraulic pump station; and
4) performing the pre-tightening operation by switching to the next set of the eyelet bolt assemblies clockwise or counterclockwise after one set of the eyelet bolt assemblies being fully pre-tightened.

According to one aspect of the present invention, the bolt tensioner contains four combination tension heads, and each combination tension head contains 3 tension cylinders for pre-tightening the eyelet bolt assemblies each time.

Compared with the prior art, the nuclear power plant equipment gate connection fastening structure and fastening method therefor of the present invention have the following advantages:
1) When the equipment gate is closed (opened), the eyelet bolt assembly can be pre-tightened (loosened) by the hydraulic bolt tensioner, and a numbe of eyelet bolt assemblies can be pre-tightened at one time, which can improve the efficiency and quality of pre-tightening;
2) After loosening, there is no need to remove the eyelet bolt assemblies, which reduces the workload of assembly and disassembly. When it is closed, the connection and fastening of the equipment gate can be realized quickly;
3) Due to the U-shaped holes defined in the flange, the problem that some bolts cannot be installed due to the deformation of the sleeve flange caused by the civil prestress is solved;
4) As the eyelet bolts and external nuts are threadedly connected to each, there is no need to worry about damage to the bolt holes of the equipment;
5) Due to the fastening between the eyelet bolts and the conical gasket, spherical gasket and external nuts, desirable adjustment can be obtained.

### BRIEF DESCRIPTION OF THE DRAWINGS

The nuclear power plant equipment gate connection fastening structure and fastening method therefor of the present invention will be described in detail with reference to the accompanying drawings, in which:
Fig. 1 is a partially cross-sectional view of a nuclear power plant equipment gate connection fastening structure according to one embodiment of the present invention;
Fig. 2 is a schematic diagram of U-shaped holes on the shell cover flange/sleeve flange of the nuclear power plant equipment gate connection fastening structure according to one embodiment of the present invention;
Fig. 3 is a schematic diagram of opening the eyelet bolt assembly of the nuclear power plant equipment gate connection fastening structure according to one embodiment of the present invention;
Fig. 4 is a cross-sectional view of a spring clip of the nuclear power plant equipment gate connection fastening structure according to one embodiment of the present invention;
Fig. 5 is an illustative diagram of the hydraulic stretching scheme of the nuclear power plant equipment gate according to one embodiment of the present invention; and
Fig. 6 is an enlarged view of the circled portion A in Fig. 5.
10-sleeve flange; 12-penetrating sleeve; 20-shell cover flange; 22-gate shell cover; 30-"U"-shaped hole; 40-eyelet bolt assembly; 42-eyelet bolt; 44-external nut; 46-adjustable gasket; 460-conical gasket; 462-spherical gasket; 50-support; 52-pin; 60-spring clip; 600-spring plate; 602-positioning component; 70- sealing element; 700-screw; 702-pressure plate; 704-inner sealing ring; 706-outer sealing ring; 72-stretching cylinder assembly; 73-stretching nut; 74-hydraulic piston cylinder; 75-main nut sleeve; 76-skirt seat; 80-connecting plate; 82-hydraulic pipeline; 83- hydraulic pump station; 84-oil distributor.

### DETAILED DESCRIPTION OF THE INVENTION

In order to make the object, technical solutions and effects of the present invention clearer, the present invention will be further described in detail below in conjunction with the accompanying drawings and embodiments. It should be understood that the embodiments described herein are only for explaining the present invention, not for limiting the scope of the present invention.

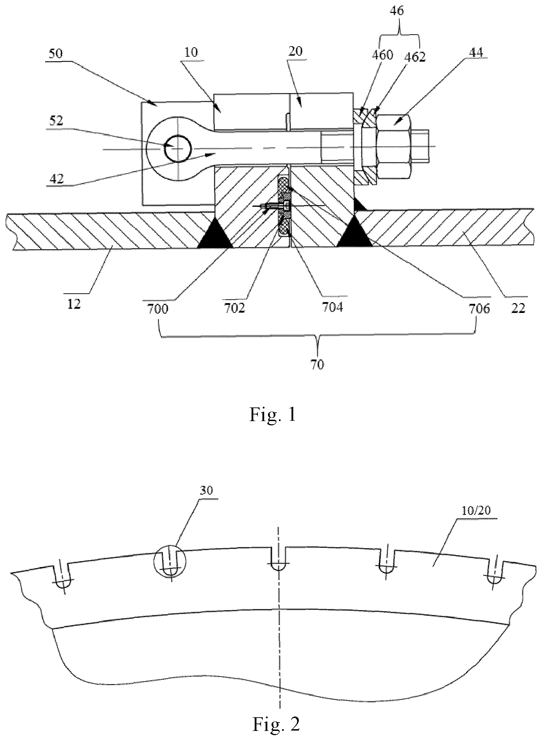

Referring to Figs. 1 to 4, a nuclear power plant equipment gate connection fastening structure according to one embodiment of the present invention includes:
a sleeve flange 10 fixedly connected to a penetrating sleeve 12 pre-embedded in a containment wall; and
a shell cover flange 20 fixedly connected to a gate shell cover 22;
wherein a number of "U"-shaped holes 30 having openings facing outward are provided at corresponding positions of the sleeve flange 10 and the shell cover flange 20 along the circumference thereof, after the sleeve flange 10 and the shell cover flange 20 are in butt joint, the sleeve flange 10 and the shell cover flange 20 are fastened by means of an eyelet bolt assemblies 40, and each eyelet bolt assembly 40 includes a detachable eyelet bolt 42, an external nut 44, and an adjustable gasket 46 to prevent the external nut 44 from jamming sheathed onto the eyelet bolt 42. During fastening, the the eyelet bolt 42 is inserted in a corresponding "U"-shaped hole 30 and threadly connected to the external nut 44.

The sleeve flange 10 is welded and connected to the penetrating sleeve 12 pre-embedded in the containment wall, and a number of "U"-shaped holes 30 opening outward are evenly arranged along the circumference of the sleeve flange 10.

The shell cover flange 20 is welded to the gate shell cover 22, a number of "U"-shaped holes 30 opening outward are evenly arranged along the circumference of the shell cover flange 20, and the "U"-shaped holes 30 in the shell cover flange 20 correspond to the "U"-shaped holes 30 in the sleeve flange 10. Due to the arrangement of the "U"-shaped holes 30, to realize quick opening and closing of the equipment gate, there is no need to completely remove the external nut 44 from the eyelet bolt 42, which can also prevent the bolt holes from being unable to be positioned due to deformation caused by the prestress.

The eyelet bolt assembly 40 includes a detachable eyelet bolt 42, an external nut 44 and an adjustable gasket 46 sheathed onto the eyelet bolt 42 to prevent the external nut 44 from jamming.

Specifically, one end of the eyelet bolt 42 has an arc-shaped structure and has a hole, and the other end of the eyelet bolt 42 has a thread. The size of the end having the hole is larger than the size of the "U"-shaped hole 30. When tightened, the end of the eye bolt 42 having a hole is located on the outside of the sleeve flange 10, the middle portion of the eye bolt 42 is located in the "U"-shaped holes 30 of the sleeve flange 10 and the shell cover flange 20, and the threaded end of the eye bolt 42 is located on the outer side of the shell cover flange 20, to be threadedly connected with the external nut 44.

The adjustable gasket 46 is mainly used to prevent the external nut 44 from jamming during tightening. The adjustable gasket 46 includes a conical gasket 460 and a spherical gasket 462. In tightening, the eyelet bolt 42 is directly placed into the "U"-shaped hole 30 from the opening of the "U"-shaped hole 30. The plane of the conical gasket 460 is abutted against the shell cover flange 20, the spherical surface of the spherical gasket 462 is located in the concave surface of the conical gasket 460, and the external nut 44 abuts against the horizontal plane of the spherical gasket 462. The external nut 44 is tightened from the outside of the shell cover flange 20, to connect and fasten the joint bolt 42. Via adjusting the positions of the conical gasket 460 and the spherical gasket 462, the external nut 44 can be prevented from jamming, which can realize quick opening and closing, and avoid the defect of being incapable of being replaced due to thread damage.

To avoid removing the entire eyelet bolt assembly 40 frequently in opening, a support 50 is welded on the outside of the sleeve flange 10. The support 50 is mainly welded to the side where the "U"-shaped holes 30 located and correspond to the "U"-shaped holes 30. The support 50 is provided with a pin 52. The pin 52 is mainly provided in the middle of the support 50. The diameter of the pin 52 corresponds to the bolt hole of the eyelet bolt 42. The pin 52 is inserted in the bolt hole of the eyelet bolt 42 and serves as the fixed shaft and rotating shaft of the eyelet bolt assembly 40. When the equipment gate is opened, the external nut 44 is loosened, after the external nut 44 and the adjustable gasket 46 is retracted to a certain extent, the eyelet bolt assembly 40 is directly rotated outward along the "U"-shaped hole 30. In rotation, the pin 52 acts as the rotating shaft, the eyelet bolt assembly 40 can be disassembled from the sleeve flange 10 and the shell cover flange 20, thereby finally fixing the eyelet bolt assembly 40 on the support 50 by the pin 52.

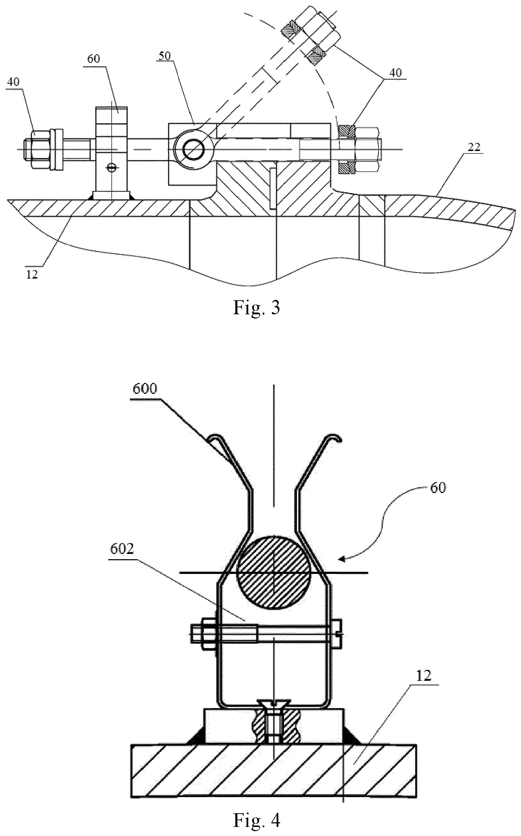

Referring to Figs. 3 and 4, in order to further reasonably place the eyelet bolt assembly 40, a spring clip 60 is fixed on the penetrating sleeve 12 by bolts. The spring clip 60 includes two symmetrically arranged spring plates 600. A positioning component 602 is arranged between the two spring plates 600 for positioning the eyelet bolt assembly 40. The positioning component 602 is usually a detachable bolt, and the spring plate 600 has resilience.

The spring clip 60 and the eyelet bolt assembly 40 are arranged in one-to-one correspondence, and the distance between the spring clip 60 and the sleeve flange 10 is less than the length of the eyelet bolt 42. Preferably, the distance between the spring clip 60 and the sleeve flange 10 is 1/3~3/4 of the length of the eyelet bolt 42. When the equipment gate is opened, the external nut 44 is loosened, and the external nut 44 and the adjustable gasket 46 are retracted to a certain extent, the eyelet bolt assembly 40 is directly rotated 180 degrees about the pin 52 as the rotation shaft until being placed in the spring clip 60 at one side of the sleeve flange10 and being positioned by the positioning component 602, to prevent the eyelet bolt assembly 40 from falling out.

In closing, one end of the eyelet bolt assembly 40 is taken out of the spring clip 60. The pin 52 is used as the rotating shaft. One end of the eyelet bolt assembly 40 is put into the corresponding "U"-shaped hole 30 of the sleeve flange 10 and the shell cover flange 20 after rotating 180 degrees. The external nut 44 is then tightened. The adjustable gasket 46 is adjusted. And finally the sleeve flange 10 and the shell cover flange 20 are tightened.

In order to further improve the sealing performance of the sleeve flange 10 and the shell cover flange 20, a sealing element 70 is also provided on the sealing surface of the sleeve flange 10. The sealing element 70 includes a screw 700, a pressure plate 702, an inner sealing ring 704 and an outer sealing ring 706. Specifically, the inner sealing ring 704 and the outer sealing ring 706 are O-rings, which are arranged in the groove defined on the sealing surface of the sleeve flange 10. The pressure plate 702 is pressed against the inner sealing ring 704 and the outer sealing ring 706 by screws 700. The sealing performance of the sleeve flange 10 and the shell cover flange 20 is realized via the sealing element 70.

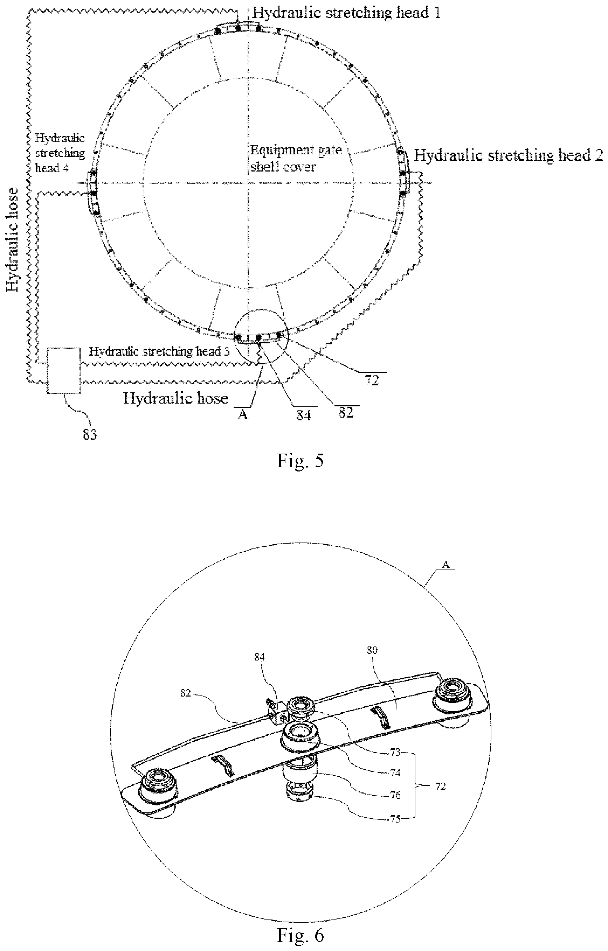

Referring to Figs. 5 and 6, the method for fastening a nuclear power plant equipment gate connection fastening structure of the present invention includes the steps of:
1) arranging orientations according to eyelet bolt assemblies 40 of an equipment gate, and performing bolt pre-tightening by a bolt tensioner, the bolt tensioner containing 2-4 combination tension heads, each combination tension head containing 2-4 tension cylinders for pre-tightening 4-16 eyelet bolt assemblies 40 each time;
2) during pre-tightening, placing the combination tension heads on the eyelet bolt assemblies 40 which are circumferentially arranged symmetrically and evenly, and connecting a hydraulic pump station 83 via a hydraulic pipeline 82;
3) performing tension and pre-tightening operations on the eyelet bolts 42 by using hydraulic power assist after starting the hydraulic pump station 83; and
4) after one set of the eyelet bolt assemblies 40 being pre-tightened fully, performing the pre-tightening operation by switching to the next set of the eyelet bolt assemblies 40 clockwise or counterclockwise.

Specifically, according to the arrangement orientation of the eyelet bolt assembly 40 of the equipment gate, a set of (4) sheet-shaped hydraulic combination tension heads is designed. Each sheet-shaped hydraulic combination tension head contains 3 stretching cylinder assemblies 72, and can cover 12 eyelet bolt assemblies 40 each time. Three stretching cylinder assemblies 72 are fixed on the connecting plate 80, to connect the three stretching cylinder assemblies 72 as a whole. Each stretching cylinder assembly 72 includes a detachable stretching nut 73, a hydraulic piston cylinder 74, a main nut sleeve 75 and a skirt seat 76. The stretching nut 73 is threadedly connected to the eyelet bolt 42 to be stretched to realize the bolt tension. The hydraulic piston cylinder 74 pushes the piston upward through hydraulic power assist, and finally realizes the extension of the eyelet bolt 42. The main nut sleeve 75 is sleeved on the external nut 44 of the eyelet bolt assembly 40 for tightening the external nut 44. The skirt seat 76 is used to support the stretching cylinder assembly 72. In pre-tightening, the four stretching heads are symmetrically and evenly fastened on the eyelet bolt assemblies 40 which are circumferentially arranged. The main nut sleeve 75 of each stretching cylinder assembly 72 is inserted into the external nut 44 of the eyelet bolt assembly 40, and the stretching nut 73 is screwed in until it cannot be screwed anymore. A hydraulic pump station 83 is connected through the hydraulic pipeline 82, and the hydraulic pipeline 82 is connected to an oil distributor 84. The hydraulic oil circuit is distributed through the oil distributor 84, so that the pressure of each cylinder is consistent. After the hydraulic pump station 83 is started, the eyelet bolt 42 is stretched by hydraulic power assist, and the external nut 44 of the eyelet bolt assembly 40 is turned to tighten (or loosen) via rotating the main nut sleeve 75. After a set of eyelet bolt assemblies 40 has been fully pre-tightened (or loosened), the hydraulic pump is turned off and the stretching nut 73 is unscrewed. The next set of twelve eyelet bolt assemblies 40 is switched clockwise or counterclockwise. The pre-tightening (or loosening) of the 48 eyelet bolts can be completed after four operations.

Compared with the prior art, the nuclear power plant equipment gate connection fastening structure and fastening method therefor of the present invention have the following advantages:
1) When the equipment gate is closed (opened), the eyelet bolt assembly can be pre-tightened (loosened) by the hydraulic bolt tensioner, and a numbe of eyelet bolt assemblies can be pre-tightened at one time, which can improve the efficiency and quality of pre-tightening;
2) After loosening, there is no need to remove the eyelet bolt assemblies, which reduces the workload of assembly and disassembly. When it is closed, the connection and fastening of the equipment gate can be realized quickly;
3) Due to the U-shaped holes defined in the flange, the problem that some bolts cannot be installed due to the deformation of the sleeve flange caused by the civil prestress is solved;
4) As the eyelet bolts and external nuts are threadedly connected to each, there is no need to worry about damage to the bolt holes of the equipment;
5) Due to the fastening between the eyelet bolts and the conical gasket, spherical gasket and external nuts, desirable adjustment can be obtained.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments, it should be appreciated that alternative embodiments without departing from the scope of the appended claims. Although specific terms are employed herein, they are used in a generic and descriptive sense only and not for purposes of limitation.

## Claims

1. A nuclear power plant equipment gate connection fastening structure, comprising:
a sleeve flange (10) being fixedly connected to a penetrating sleeve (12) pre-embedded in a containment wall; and
a shell cover flange (20) being fixedly connected to a gate shell cover (22);
**characterized in that** a plurality of "U"-shaped holes (30) having openings facing outward are provided at corresponding positions of the sleeve flange (10) and the shell cover flange (20) along the circumference thereof, after the sleeve flange (10) and the shell cover flange (20) are in butt joint, the sleeve flange (10) and the shell cover flange (20) are fastened by means of eyelet bolt assemblies (40), and each eyelet bolt assembly (40) comprises a detachable eyelet bolt (42), an external nut (44), and an adjustable gasket (46) to prevent the external nut (44) from jamming sheathed onto the eyelet bolt (42).

2. The nuclear power plant equipment gate connection fastening structure according to claim 1, **characterized in that** the adjustable gasket (46) comprises a conical gasket (460) and a spherical gasket (460), when tightened, a plane of the conical gasket (460) abuts against the shell cover flange (20), a spherical surface of the spherical gasket (460) is located in a concave surface of the conical gasket (460), and the external nut (44) abuts against the spherical gasket (460).

3. The nuclear power plant equipment gate connection fastening structure according to claim 1, **characterized in that** a support (50) is provided on an outer side of the sleeve flange (10), a pin (52) is provided on the support (50), and the pin (52) is inserted in a bolt hole defined in the detachable eyelet bolt (42) and acts as a fixed shaft and rotating shaft of the eyelet bolt assembly (40).

4. The nuclear power plant equipment gate connection fastening structure according to claim 3, **characterized in that** the penetrating sleeve (12) is formed with a spring clip (60), and a distance between the spring clip (60) and the sleeve flange (10) is smaller than a length of the detachable eyelet bolt (42), so that the rotated eyelet bolt assembly (40) is received in the spring clip (60) when the equipment gate is opened.

5. The nuclear power plant equipment gate connection fastening structure according to claim 4, **characterized in that** the spring clip (60) comprises two symmetrically arranged spring plates (600), and a positioning component (602) is arranged between the two spring plates (600).

6. The nuclear power plant equipment gate connection fastening structure according to claim 4, **characterized in that** the spring clip (60) is fixed on the penetrating sleeve (12) by a bolt.

7. The nuclear power plant equipment gate connection fastening structure according to claim 3, **characterized in that** the support (50) is fixed on the sleeve flange (10) by welding.

8. The nuclear power plant equipment gate connection fastening structure according to claim 1, **characterized in that** a sealing element (70) is provided on a sealing surface of the sleeve flange (10), and the sealing element (70) comprises a screw (700), a pressure plate (702), an inner sealing ring (704) and an outer sealing ring (706), the inner sealing ring (704) and the outer sealing ring (706) are arranged on the sleeve flange (10), and the pressure plate (702) is pressed on the inner sealing ring (704) and the outer sealing ring (706) by screws.

9. A method for fastening a nuclear power plant equipment gate connection fastening structure according to any one of claims 1 to 8, **characterized in that** the method comprises the steps of:
1) arranging orientations according to eyelet bolt assemblies (40) of an equipment gate, and performing bolt pre-tightening by a bolt tensioner, the bolt tensioner containing 2-4 combination tension heads, each combination tension head containing 2-4 tension cylinders for pre-tightening 4-16 eyelet bolt assemblies (40) each time;
2) during pre-tightening, symmetrically and evenly placing the combination tension heads on the eyelet bolt assemblies (40) which are circumferentially arranged, and connecting to a hydraulic pump station (83) via a hydraulic pipeline (82);
3) performing tension and pre-tightening operations on the eyelet bolts (42) by hydraulic power assist after starting the hydraulic pump station (83); and
4) performing the pre-tightening operation by switching to the next set of the eyelet bolt assemblies (40) clockwise or counterclockwise after one set of the eyelet bolt assemblies (40) being pre-tightened fully.

10. The method for fastening a nuclear power plant equipment gate connection fastening structure according to claim 9, **characterized in that** the bolt tensioner contains four combination tension heads, and each combination tension head contains 3 tension cylinders for pre-tightening the eyelet bolt assemblies (40) each time.
